# EUROPÄISCHE PATENTSCHRIFT

(11) **EP 2 921 279 B1**
(45) Veröffentlichungstag und Bekanntmachung des Hinweises auf die Patenterteilung: **22.02.2017**
(21) Anmeldenummer: 14160921.4
(22) Anmeldetag: 20.03.2014
(51) Int. Cl.: B29C 47/08, B29C 47/76, B29C 47/36, B29C 47/40, B29C 47/60, B29C 47/00, B29C 47/70

(54) **Vorrichtung und Verfahren zur Homogenisierung von Kunststoffschmelzen**
Device and method for homogenising plastic melts
Dispositif et procédé d'homogénéisation de coulées de matière synthétique

(43) Veröffentlichungstag der Anmeldung: 23.09.2015
(73) Patentinhaber: Coperion GmbH, 70469 Stuttgart (DE)
(72) Erfinder: Ahlgrimm, Michael, 74354 Besigheim (DE)
(74) Vertreter: Rau, Schneck & Hübner Patentanwälte Rechtsanwälte PartGmbB

(56) Entgegenhaltungen:
- EP-A1- 0 887 172
- CN-U- 203 093 000
- US-A- 3 863 001
- US-A1- 2010 015 267

## Beschreibung

Die Erfindung betrifft eine Vorrichtung zur Homogenisierung von Kunststoffschmelzen gemäß dem Oberbegriff des Anspruchs 1. Ferner betrifft die Erfindung ein Verfahren zur Homogenisierung von Kunststoffschmelzen.

Aus der EP 2 374 601 A1 ist eine Mehrwellen-Schneckenmaschine zur Aufbereitung von Polymerschmelzen bekannt. In den Gehäusebohrungen der Schneckenmaschine sind Seiher-Platten angeordnet, die eine Vielzahl von Durchgangsöffnungen für die Polymerschmelze aufweisen. Die Polymerschmelze wird durch die Durchgangsöffnungen gefördert. Hierbei teilt sich die Polymerschmelze in eine Vielzahl von Teilströmen auf, so dass die Oberfläche der Polymerschmelze vergrößert und die Polymerschmelze hierdurch entgast und homogenisiert wird.

Aus der US 2010/0015267 A1 ist eine Extrusionsdüse für ein Extrusionssystem bekannt, die mehrere Kanäle mit unterschiedlicher Länge, Querschnittsfläche und Querschnittsform aufweist.

Aus der US 3 863 001 A ist eine Extrusionsvorrichtung mit einer Lochplatte bekannt, die eine unterschiedliche Dicke in der Strömungsrichtung aufweist. In der Lochplatte sind eine Vielzahl von Kanälen ausgebildet, die in Folge der unterschiedlichen Dicke eine unterschiedliche Kanallänge aufweisen. Die Strömungskanäle weisen mittig eine größere Länge auf als in einem umgebenden Randbereich.

Aus der CN 203 093 000 U ist ein Extruder bekannt, der austragsseitig einen Mischblock aufweist. Der Mischblock hat eine unterschiedliche Dicke, so dass die darin ausgebildeten Strömungskanäle eine unterschiedliche Länge aufweisen.

Aus der EP 0 887 172 A1 ist ein Extruder mit einer austragsseitig angeordneten Lochplatte bekannt. Die Lochplatte dient zur Veränderung der radialen Position des Plastikmaterials um Farbänderungen durchzuführen. Hierzu hat die Lochplatte Strömungskanäle, die sich in der Strömungsrichtung und damit in der Länge sowie in der Querschnittsfläche unterscheiden. Der Erfindung liegt die Aufgabe zugrunde, eine Vorrichtung zu schaffen, die auf einfache, wirkungsvolle und effiziente Weise eine Homogenisierung von Kunststoffschmelzen ermöglicht.

Diese Aufgabe wird durch eine Vorrichtung mit den Merkmalen des Anspruchs 1 gelöst. Dadurch, dass sich die Strömungskanäle des mindestens einen Homogenisierungselements in ihrer Länge, und/oder Querschnittsform unterscheiden, entstehen entlang der Strömungskanäle unterschiedliche Differenzdrücke, so dass die Teilströme der Kunststoffschmelze beim Austritt aus dem jeweiligen Strömungskanal unterschiedliche Strömungsgeschwindigkeiten und/oder Strömungsprofile haben. Beim nachfolgenden Übergang zu einem gemeinsamen Schleppströmungsprofil kommt es ausgehend von den unterschiedlichen Strömungsgeschwindigkeiten der Teilströme zu einer Dehnung und Scherung und somit zu einer Durchmischung und Homogenisierung der Kunststoffschmelze. Insbesondere die Dehnung führt zu einer wirkungsvollen Durchmischung und Homogenisierung der Kunststoffschmelze. Dies gilt insbesondere für bimodale Polymerschmelzen. Die Querschnittsfläche und/oder die Querschnittsform des jeweiligen Strömungskanals bleiben entlang seiner Länge konstant. Dadurch, dass die freien Querschnittsflächen der Strömungskanäle vergleichsweise groß ausgebildet sein können, da die Homogenisierungswirkung im Wesentlichen von der Differenz der Strömungsgeschwindigkeiten der Teilströme abhängt, ist der Druckverlust der Kunststoffschmelze entlang des mindestens einen Homogenisierungselements vergleichsweise gering. Zudem ist der Aufbau des mindestens einen Homogenisierungselements einfach und robust. Insgesamt ermöglicht die Vorrichtung somit auf einfache, wirkungsvolle und effiziente Weise eine Homogenisierung von Kunststoffschmelzen.

Die Vorrichtung dient insbesondere zur Homogenisierung von Kunststoffschmelzen, insbesondere von Polymerschmelzen, die Bestandteile mit unterschiedlichen Viskositäten aufweisen. Dies ist beispielsweise bei bimodalen Polymerschmelzen der Fall. Durch die Vorrichtung können insbesondere Gele in bimodalen Polymerschmelzen deutlich reduziert werden, wodurch eine Homogenisierung der bimodalen Polymerschmelze erfolgt.

Die Vorrichtung ist als Schneckenmaschine, insbesondere als Mehrwellen-Schneckenmaschine, ausgebildet. Die Schneckenmaschine weist ein Gehäuse auf, in dem mindestens ein Gehäusekanal bzw. mindestens eine Gehäusebohrung ausgebildet ist. In dem mindestens einen Gehäusekanal bzw. der mindestens einen Gehäusebohrung ist mindestens eine Behandlungselementwelle angeordnet, die um eine zugehörige Drehachse drehantreibbar ist. Die mindestens eine Behandlungselementwelle umfasst mindestens eine Welle, auf der nacheinander Behandlungselemente drehfest angeordnet sind. Das mindestens eine Homogenisierungselement ist zwischen einer Zuführöffnung und einer Austragsöffnung der Schneckenmaschine angeordnet. Das mindestens eine Homogenisierungselement erstreckt sich in den mindestens einen Gehäusekanal bzw. die mindestens eine Gehäusebohrung und wird insbesondere von der mindestens einen Behandlungselementwelle durchsetzt. Das mindestens eine Homogenisierungselement ist insbesondere fest mit dem Gehäuse verbunden. Bei einer Mehrwellen-Schneckenmaschine sind die Behandlungselementwellen vorzugsweise dicht kämmend ausgebildet und gleichsinnig drehantreibbar. Stromabwärts des jeweiligen Homogenisierungselements ist vorzugsweise eine Mischzone ausgebildet, in der auf der mindestens einen Welle keine Behandlungselemente angeordnet sind. Vorzugsweise ist in der Mischzone mindestens eine Hülse auf der mindestens einen Welle angeordnet, so dass in der Mischzone ein Freiraum bzw. Mischraum zur Homogenisierung und Durchmischung der Teilströme ausgebildet wird.

Die mindestens eine Homogenisierungsvorrichtung ist Teil einer Aufbereitungsanlage zur Aufbereitung von Kunststoffen, insbesondere von Polymeren. Die Aufbereitungsanlage umfasst die als Schneckenmaschine ausgebildete Homogenisierungsvorrichtung und gegebenenfalls eine statische Homogenisierungsvorrichtung. Die statische Homogenisierungsvorrichtung ist beispielsweise zwischen einer Schneckenmaschine und einer Granuliervorrichtung angeordnet.

Eine Vorrichtung nach Anspruch 2 gewährleistet eine wirkungsvolle Homogenisierung. Durch die unterschiedlichen Längen weisen die Teilströme am stromabwärtigen Ausgang der Strömungskanäle unterschiedliche Strömungsgeschwindigkeiten und/oder Strömungsprofile auf, so dass eine Dehnung, Scherung und Durchmischung der Kunststoffschmelze erfolgt. Durch die Anzahl unterschiedlich langer Strömungskanäle kann die Homogenisierungswirkung für die jeweilige Kunststoffschmelze optimiert werden. Die Querschnittsfläche und/oder die Querschnittsform der Strömungskanäle ist/sind gleich und/oder unterschiedlich.

Eine Vorrichtung nach Anspruch 3 gewährleistet eine wirkungsvolle Homogenisierung. Durch das Verhältnis der maximalen Länge Lₘₐₓ zu der minimalen Länge Lₘᵢₙ wird der Unterschied der Strömungswiderstände in den einzelnen Strömungskanälen und somit der Unterschied der Strömungsgeschwindigkeiten der Teilströme am stromabwärtigen Ausgang der Strömungskanäle beeinflusst. Durch das Verhältnis Lₘₐₓ / Lₘᵢₙ, ist dementsprechend die Homogenisierungswirkung optimierbar.

Eine Vorrichtung nach Anspruch 4 gewährleistet eine wirkungsvolle und effiziente Homogenisierung. Durch die minimale Länge Lₘᵢₙ wird einerseits eine minimale Homogenisierungswirkung gewährleistet, wohingegen durch die Begrenzung der maximalen Länge Lₘₐₓ ein unerwünscht hoher Druckverlust vermieden wird.

Eine Vorrichtung nach Anspruch 5 gewährleistet eine wirkungsvolle Homogenisierung. Dadurch, dass die Strömungskanäle bündig enden, treffen die Teilströme der Kunststoffschmelze am stromabwärtigen Ausgang der Strömungskanäle mit möglichst unterschiedlichen Strömungsgeschwindigkeiten gleichzeitig aufeinander. Hierdurch wird eine optimale Dehnung und Scherung und dementsprechend eine optimale Homogenisierungswirkung erzielt.

Eine Vorrichtung nach Anspruch 6 gewährleistet auf einfache Weise eine wirkungsvolle Homogenisierung. Vorzugsweise enden die Strömungskanäle am stromaufwärtigen Eingang versetzt zueinander und am stromabwärtigen Ausgang bündig zueinander. Hierdurch wird einerseits eine wirkungsvolle Homogenisierung gewährleistet, wobei andererseits der Aufbau des mindestens einen Homogenisierungselements einfach ist. Bei einem ersten Ausführungsbeispiel weist das mindestens eine Homogenisierungselement eine Grundplatte auf, die insbesondere in der Förderrichtung der Kunststoffschmelze eine konstante Dicke bzw. Länge aufweist, und an der Rohre mit unterschiedlicher Länge und ggf. zusätzlich unterschiedlicher Querschnittsfläche und/oder Querschnittsform angeordnet sind. Die Rohre können beispielsweise mit der Grundplatte verschraubt und/oder verlötet und/oder verschweißt werden. Durch verschraubte Rohre kann das mindestens eine Homogenisierungselement einfach hergestellt und in der gewünschten Homogenisierungswirkung eingestellt werden. Bei einem zweiten Ausführungsbeispiel ist das mindestens eine Homogenisierungselement aus einem Grundkörper bzw. einer Grundplatte geformt, der bzw. die durch Materialabtrag in der Förderrichtung der Kunststoffschmelze Bereiche mit unterschiedlicher Dicke bzw. Länge aufweist. In diesen Bereichen sind die Strömungskanäle ausgebildet. Das Bearbeiten des Grundkörpers erfolgt beispielsweise durch Fräsen oder Erodieren. Die Strömungskanäle werden beispielsweise durch in den Grundkörper eingebrachte Bohrungen ausgebildet.

Eine Vorrichtung nach Anspruch 7 gewährleistet eine wirkungsvolle Homogenisierung. Durch die unterschiedlichen Querschnittsflächen ergeben sich unterschiedliche Strömungswiderstände, so dass die Teilströme an den stromabwärtigen Ausgängen der Strömungskanäle unterschiedliche Strömungsgeschwindigkeiten und/oder Strömungsprofile aufweisen. Stromabwärts des mindestens einen Homogenisierungselements stellt sich wieder eine gleichmäßige Strömung ein, wodurch eine Dehnung und Scherung der Teilströme und dementsprechend eine Homogenisierung der Kunststoffschmelze erfolgt. Die Länge und/oder die Querschnittsform der Strömungskanäle ist/sind gleich und/oder unterschiedlich. Durch die Anzahl der unterschiedlichen Querschnittsflächen ist die Homogenisierungswirkung einstellbar bzw. optimierbar.

Eine Vorrichtung nach Anspruch 8 gewährleistet eine effiziente und wirkungsvolle Homogenisierung. Durch das Verhältnis der maximalen Querschnittsfläche Aₘₐₓ zu der minimalen Querschnittsfläche Aₘᵢₙ ist die Homogenisierungswirkung einstellbar, da sich der Unterschied der Strömungsgeschwindigkeiten in Abhängigkeit dieses Verhältnisses ändert. Gleichzeitig ist eine Einstellung der freien Querschnittsfläche derart möglich, dass der Strömungswiderstand und damit der Druckverlust der Kunststoffschmelze vergleichsweise gering sind.

Eine Vorrichtung nach Anspruch 9 gewährleistet eine effiziente und wirkungsvolle Homogenisierung. Durch die minimale Querschnittsfläche Aₘᵢₙ und die maximale Querschnittsfläche Aₘₐₓ wird einerseits eine gewünschte Homogenisierungswirkung gewährleistet und andererseits ein unerwünscht hoher Druckverlust vermieden.

Eine Vorrichtung nach Anspruch 10 gewährleistet eine wirkungsvolle Homogenisierung. Durch die unterschiedlichen Querschnittsformen werden unterschiedliche Strömungswiderstände erzielt, so dass die Teilströme an einem stromabwärtigen Ausgang unterschiedliche Strömungsgeschwindigkeiten und/oder Strömungsprofile haben. Stromabwärts des Homogenisierungselements stellt sich eine gleichmäßige Strömung ein, wodurch eine Dehnung und Scherung und somit eine Homogenisierung der Kunststoffschmelze erfolgt. Die Länge und/oder die Querschnittsfläche der Strömungskanäle ist/sind gleich und/oder unterschiedlich. Durch die Anzahl der unterschiedlichen Querschnittsformen ist die Homogenisierungswirkung einstellbar bzw. optimierbar. Darüber hinaus ermöglichen die unterschiedlichen Querschnittsformen eine optimale Ausnutzung der insgesamt zur Verfügung stehenden Querschnittsfläche und somit eine Optimierung der freien Querschnittsfläche der Strömungskanäle. Der durch das mindestens eine Homogenisierungselement verursachte Druckverlust kann dementsprechend minimiert werden.

Eine Vorrichtung nach Anspruch 1 gewährleistet auf einfache Weise eine wirkungsvolle Homogenisierung. Eine runde Querschnittsform ist vergleichsweise einfach herstellbar. Durch eine polygonale Querschnittsform, beispielsweise eine dreieckige, viereckige oder hexagonale Querschnittsform wird eine vergleichsweise große freie Querschnittsfläche des mindestens einen Homogenisierungselements erzielt, wodurch der Druckverlust gering ist.

Eine Vorrichtung nach Anspruch 11 gewährleistet eine effiziente Homogenisierung. Durch den geradlinigen Verlauf der Strömungskanäle, insbesondere in der Förderrichtung der Kunststoffschmelze, werden ein geringer Strömungswiderstand und damit ein geringer Druckverlust erzielt.

Eine Vorrichtung nach Anspruch 12 gewährleistet eine effiziente Homogenisierung. Dadurch, dass die Strömungskanäle parallel zueinander und insbesondere in der Förderrichtung verlaufen, wird eine vergleichsweise große freie Querschnittsfläche erzielt, wodurch der Strömungswiderstand und damit der Druckverlust an dem mindestens einen Homogenisierungselement gering ist.

Der Erfindung liegt ferner die Aufgabe zugrunde ein Verfahren zu schaffen, das eine einfache, wirkungsvolle und effiziente Homogenisierung von Kunststoffschmelzen ermöglicht.

Diese Aufgabe wird durch ein Verfahren mit den Merkmalen des Anspruchs 13 gelöst. Die Vorteile des erfindungsgemäßen Verfahrens entsprechen den bereits beschriebenen Vorteilen der erfindungsgemäßen Homogenisierungsvorrichtung. Das erfindungsgemäße Verfahren kann insbesondere auch durch die Merkmale der Ansprüche 1 bis 12 weitergebildet werden. Die Kunststoffschmelze wird beim Durchströmen des mindestens einen Homogenisierungselements in mehrere Teilströme aufgeteilt, die einen jeweils zugehörigen Strömungskanal durchströmen. Beim Austritt aus den Strömungskanälen weisen die Teilströme zumindest teilweise unterschiedliche Strömungsgeschwindigkeiten und/oder Strömungsprofile auf. Stromabwärts des mindestens einen Homogenisierungselements stellt sich eine gleichmäßige Strömung ein, wodurch eine Dehnung und Scherung der Teilströme erfolgt. Insbesondere die Dehnung in der Förderrichtung führt zu einer Durchmischung und Homogenisierung der Kunststoffschmelze.

Weitere Merkmale, Vorteile und Einzelheiten der Erfindung ergeben sich aus der nachfolgenden Beschreibung eines Ausführungsbeispiels. Es zeigen:

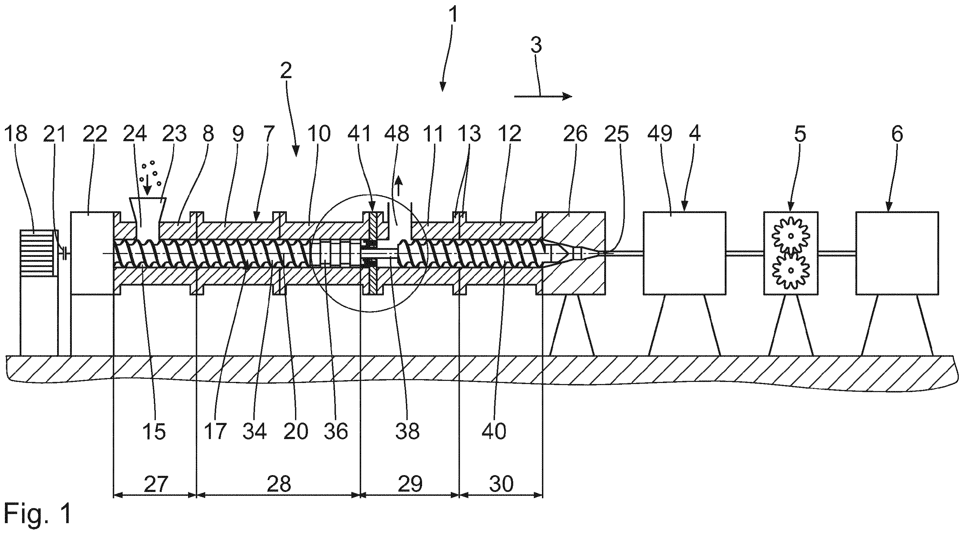

- Fig. 1: eine schematische Darstellung einer Aufbereitungsanlage zur Aufbereitung von Kunststoffen mit einer als Schneckenmaschine ausgebildeten erfindungsgemäßen Homogenisierungsvorrichtung und einer nachgeordneten statischen Homogenisierungsvorrichtung,
- Fig. 2: eine vergrößerte Darstellung der Schneckenmaschine in Fig. 1 im Bereich eines Homogenisierungselements zur Homogenisierung der in der Schneckenmaschine befindlichen Kunststoffschmelze,

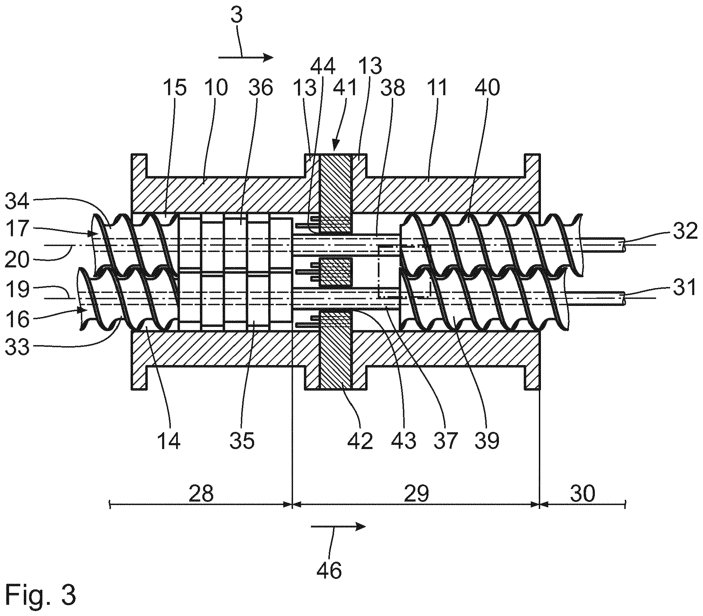

- Fig. 3: eine Draufsicht auf das Homogenisierungselement in Fig. 2,
- Fig. 4: einen Schnitt im Bereich des Homogenisierungselements entlang der Schnittlinie IV-IV in Fig. 2, und
- Fig. 5: einen Teilschnitt durch die statische Homogenisierungsvorrichtung im Bereich von Homogenisierungselementen.

Eine Aufbereitungsanlage 1 weist zur Aufbereitung von Kunststoffen eine Mehrwellen-Schneckenmaschine 2 auf, der in einer Förderrichtung 3 eine statische Homogenisierungsvorrichtung 4, eine Schmelzepumpe 5 und eine Granuliervorrichtung 6 nachgeordnet ist. Die Schneckenmaschine 2 weist ein Gehäuse 7 aus mehreren hintereinander angeordneten und als Gehäuseschüsse bezeichneten Gehäuseabschnitten 8 bis 12 auf. Die Gehäuseabschnitte 8 bis 12 weisen an ihren Enden jeweils Flansche 13 auf, über die benachbarte Gehäuseabschnitte 8 bis 12 zu dem Gehäuse 7 miteinander verbunden sind.

In dem Gehäuse 7 sind zwei zueinander parallele und einander durchdringende Gehäusebohrungen 14, 15 ausgebildet, die im Querschnitt die Form einer liegenden Acht haben. Die Gehäusebohrungen 14, 15 bilden einen Gehäusekanal. In den Gehäusebohrungen 14, 15 sind konzentrisch zwei Behandlungselementwellen 16, 17 angeordnet, die von einem Antriebsmotor 18 um zugehörige Drehachsen 19, 20 gleichsinnig drehantreibbar sind. Zwischen dem Antriebsmotor 18 und den Behandlungselementwellen 16, 17 sind in der Förderrichtung 3 hintereinander eine Kupplung 21 und ein Verzweigungsgetriebe 22 angeordnet.

An dem ersten Gehäuseabschnitt 8 ist eine Materialzuführung 23 in Form eines Trichters angeordnet, durch den aufzubereitendes Kunststoffmaterial bzw. aufzubereitende Kunststoffschmelze über eine Zuführöffnung 24 in die Gehäusebohrungen 14, 15 einführbar ist. Die in der Schneckenmaschine 2 befindliche Kunststoffschmelze K wird an einem stromabwärtigen Ende des Gehäuses 2 durch eine Austragsöffnung 25, die in einer das Gehäuse 7 abschließenden Düsenplatte 26 ausgebildet ist, ausgetragen.

Die Schneckenmaschine 2 weist in der Förderrichtung 3 nacheinander eine Einzugszone 27, eine Aufschmelzzone 28, eine Mischzone 29 und eine Druckaufbauzone 30 auf. Die Behandlungselementwellen 16, 17 weisen jeweils zugehörige Wellen 31, 32 auf, auf denen in der Förderrichtung 3 nacheinander jeweils einander paarweise zugeordnete Behandlungselemente drehfest angeordnet sind. In der Einzugszone 27 sind als Behandlungselemente erste Schneckenelemente 33, 34 drehfest auf den Wellen 31, 32 angeordnet. Die ersten Schneckenelemente 33, 34 erstrecken sich in die Aufschmelzzone 28, in der sich scheibenförmige Knetelemente 35, 36 als Behandlungselemente anschließen. In der Mischzone 29 sind Hülsen 37, 38 auf den Wellen 31, 32 angeordnet. Den Hülsen 37, 38 schließen sich zweite Schneckenelemente 39, 40 als Behandlungselemente an, die sich bis zum Ende der Druckaufbauzone 30 erstrecken. Die Behandlungselemente 33 bis 36, 39, 40 sind paarweise dicht kämmend ausgebildet.

Zur Homogenisierung der Kunststoffschmelze K weist die Mehrwellen-Schneckenmaschine 2 ein Homogenisierungselement 41 auf. Hierdurch dient die Schneckenmaschine 2 als eine Homogenisierungsvorrichtung. Das Homogenisierungselement 41 ist statisch ausgebildet. Das Homogenisierungselement 41 umfasst eine Grundplatte 42, die zwischen den Gehäuseabschnitten 10, 11 befestigt ist. Die Grundplatte 42 erstreckt sich ausgehend von dem Gehäuse 7 in die Gehäusebohrungen 14, 15 und weist zur Durchführung der Wellen 31, 32 sowie der darauf angeordneten Hülsen 37, 38 zwei Wellen-Durchgangsöffnungen 43, 44 auf. Das Homogenisierungselement 41 bildet mehrere Strömungskanäle aus, die im Einzelnen mit S₁ bis Sₙ bezeichnet werden, wobei n die Anzahl der Strömungskanäle bezeichnet. Die Strömungskanäle S₁ bis Sₙ werden durch zugehörige Rohre R₁ bis Rₙ gebildet, die in zugehörigen Durchgangsöffnungen 45 in der Grundplatte 42 befestigt sind. Die Strömungskanäle S₁ bis Sₙ verlaufen in einer Kanallängsrichtung 46 geradlinig und parallel zueinander. Die Kanallängsrichtung 46 verläuft parallel zu der Förderrichtung 3.

Die Strömungskanäle S₁ bis Sₙ weisen jeweils in der Kanallängsrichtung 46 eine zugehörige Länge L₁ bis Lₙ und quer zu der Kanalrichtung 46 eine zugehörige Querschnittsfläche A₁ bis Aₙ und eine zugehörige Querschnittsform Q₁ bis Qₙ auf. Erfindungsgemäß unterscheidet sich zumindest ein Teil der Strömungskanäle S₁ bis Sₙ in mindestens einem Merkmal aus der Gruppe Länge L₁ bis Lₙ, Querschnittsfläche A₁ bis Aₙ und Querschnittsform Q₁ bis Qₙ.

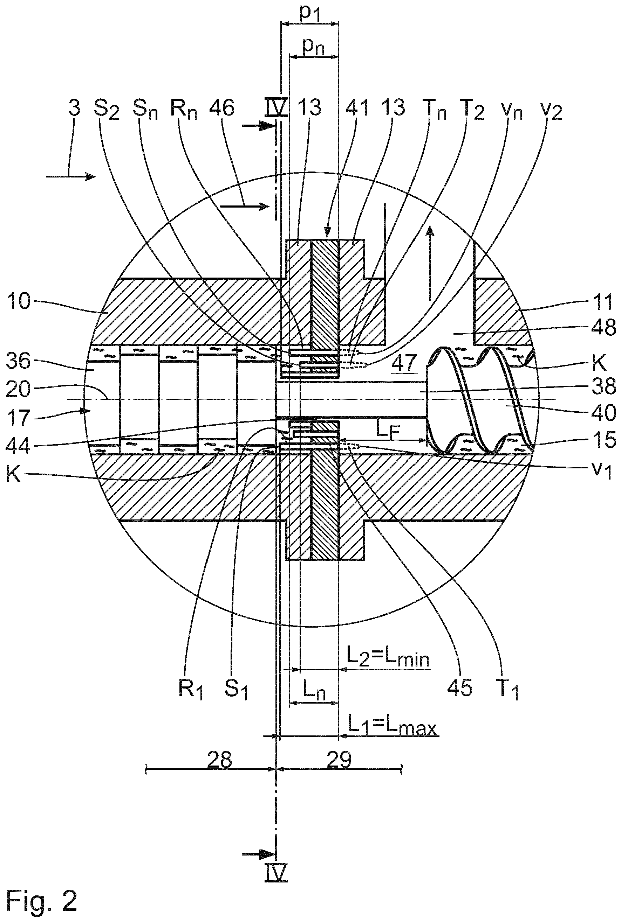

Die Strömungskanäle S₁ bis Sₙ weisen mindestens i unterschiedliche Längen L auf, wobei i die Anzahl der unterschiedlichen Längen L bezeichnet. Für i gilt: 2 ≤ i ≤ n, insbesondere 3 ≤ i ≤ n, und insbesondere 4 ≤ i ≤ n. Wie in Fig. 2 dargestellt ist, sind beispielsweise die Längen L₁, L₂ und Lₙ unterschiedlich. Die Strömungskanäle S₁ bis Sₙ enden an ihrer stromabwärtigen offenen Seite, also in der Förderrichtung 3 bzw. in der Kanallängsrichtung 46 stromabwärts bündig. Demgegenüber enden die Strömungskanäle S₁ bis Sₙ an ihrer stromaufwärtigen offenen Seite, also stromaufwärts zu der Förderrichtung 3 bzw. der Kanallängsrichtung 46 versetzt zueinander, soweit sich die Strömungskanäle S₁ bis Sₙ in ihrer Länge L₁ bis Lₙ unterscheiden.

Die Strömungskanäle S₁ bis Sₙ weisen in der Kanallängsrichtung 46 eine maximale Länge Lₘₐₓ und eine minimale Länge Lₘᵢₙ auf. In Fig. 2 weist der Strömungskanal S₁ beispielhaft die maximale Länge Lₘₐₓ = L₁ und der Strömungskanal S₂ die minimale Länge Lₘᵢₙ = L₂ auf. Für das Verhältnis der maximalen Länge Lₘₐₓ zu der minimalen Länge Lₘᵢₙ gilt: Lₘₐₓ / Lₘᵢₙ ≥ 1,2, insbesondere Lₘₐₓ / Lₘᵢₙ ≥ 1,6, und insbesondere Lₘₐₓ / Lₘᵢₙ > 2. Darüber hinaus gilt für die minimale Länge Lₘᵢₙ und/oder die maximale Länge Lₘₐₓ: Lₘᵢₙ ≥ 10 mm, insbesondere Lₘᵢₙ ≥ 30 mm, und insbesondere Lₘᵢₙ ≥ 50 mm und/oder Lₘₐₓ ≤ 500 mm, insbesondere Lₘₐₓ ≤ 300 mm, und insbesondere Lₘₐₓ ≤ 100 mm.

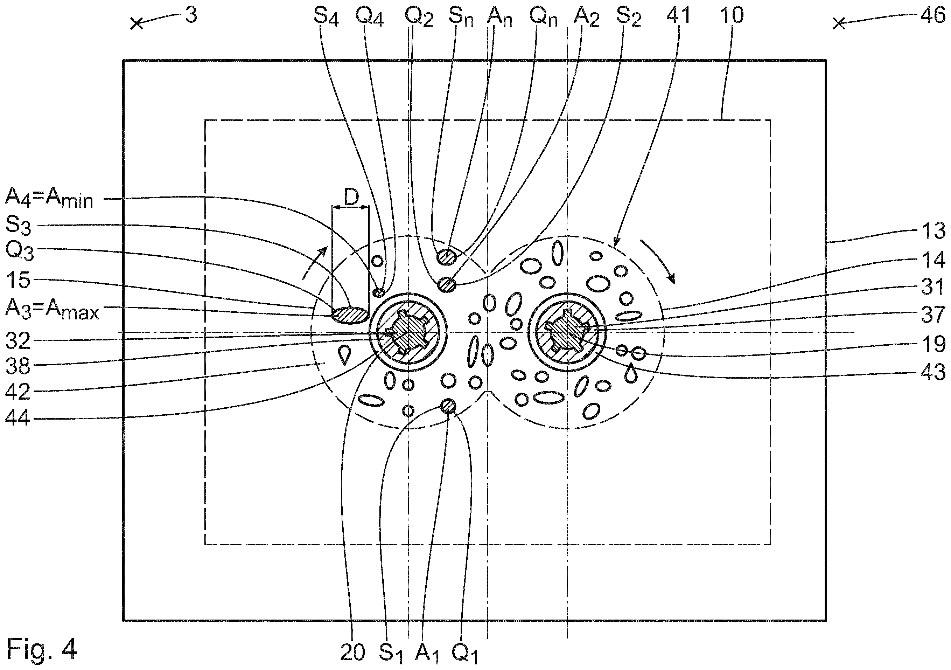

Die Strömungskanäle S₁ bis Sₙ weisen j unterschiedliche Querschnittsflächen A auf, wobei j die Anzahl unterschiedlicher Querschnittsflächen A bezeichnet. Für j gilt: 2 ≤ j ≤ n, insbesondere 3 ≤ j ≤ n, und insbesondere 4 ≤ j ≤ n. Die Querschnittsflächen A₁ bis Aₙ haben eine maximale Querschnittsfläche Aₘₐₓ und eine minimale Querschnittsfläche Aₘᵢₙ. In Fig. 4 weist beispielhaft die Querschnittsfläche A₃ des Strömungskanals S₃ die maximale Querschnittsfläche Aₘₐₓ und die Querschnittsfläche A₄ des Strömungskanals S₄ die minimale Querschnittsfläche Aₘᵢₙ auf. Für das Verhältnis der maximalen Querschnittsfläche Aₘₐₓ zu der minimalen Querschnittsfläche Aₘᵢₙ gilt: Aₘₐₓ / Aₘᵢₙ ≥ 1,2, insbesondere Aₘₐₓ / Aₘᵢₙ ≥ 1,6, und insbesondere Aₘₐₓ / Aₘᵢₙ ≥ 2. Weiterhin gilt für die minimale Querschnittsfläche Aₘᵢₙ und/oder die maximale Querschnittsfläche Aₘₐₓ: Aₘᵢₙ ≥ 5 mm², insbesondere Aₘᵢₙ ≥ 10 mm², und insbesondere Aₘᵢₙ ≥ 15 mm² und/oder Aₘₐₓ ≤ 1600 mm², insbesondere Aₘₐₓ ≤ 800 mm², und insbesondere Aₘₐₓ ≤ 600 mm².

Weiterhin weisen die Strömungskanäle S₁ bis Sₙ k unterschiedliche Querschnittsformen Q auf, wobei k die Anzahl der unterschiedlichen Querschnittsformen Q bezeichnet. Für k gilt: 2 ≤ k ≤ n, insbesondere 3 ≤ k ≤ n, und insbesondere 4 ≤ k ≤ n. Die Querschnittsformen Q der Strömungskanäle S₁ bis Sₙ sind ausgewählt aus der Gruppe rund, oval, tropfenförmig und polygonal. Die polygonalen Querschnittsformen Q sind insbesondere ausgewählt aus der Gruppe dreieckig, viereckig, fünfeckig und sechseckig. Fig. 4 zeigt beispielhaft runde, tropfenförmige und ovale Querschnittsformen Q, wobei beispielsweise die Querschnittsform Q₁ rund und die Querschnittsform Q₃ oval ist.

Stromabwärts des Homogenisierungselements 41 ist in der Mischzone 29 zwischen dem Gehäuseabschnitt 11 und den Hülsen 37, 38 ein Freiraum bzw. Mischraum 47 ausgebildet. Darüber hinaus weist das Gehäuse 7 stromabwärts des Homogenisierungselements 41 eine Entgasungsöffnung 48 auf.

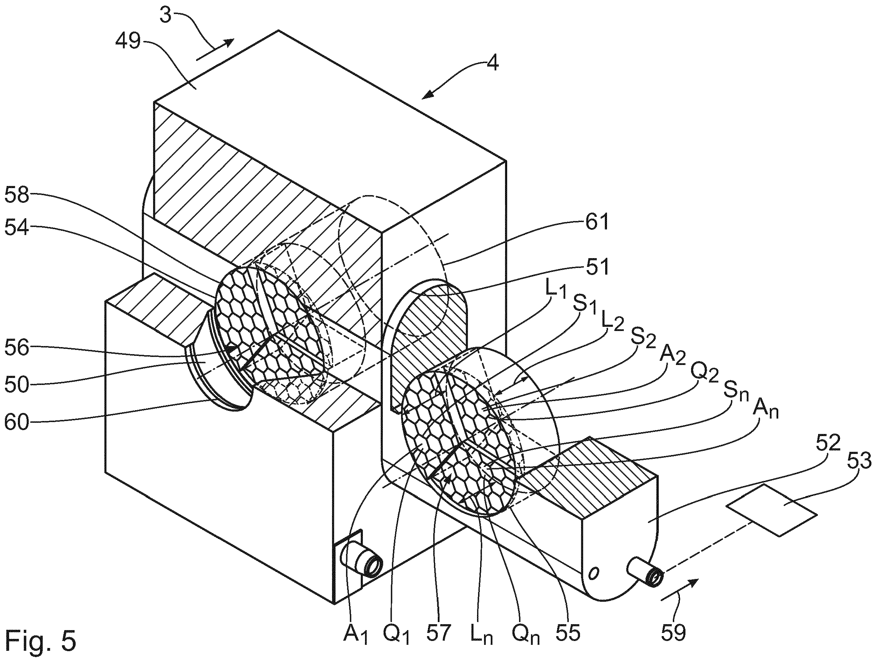

Der Schneckenmaschine 2 ist in der Förderrichtung 3 die statische Homogenisierungsvorrichtung 4 nachgeordnet. Die Homogenisierungsvorrichtung 4 weist ein Gehäuse 49 auf, in dem ein in der Förderrichtung 3 verlaufender Gehäusekanal 50 für die Kunststoffschmelze K ausgebildet ist. Der Gehäusekanal 50 weist eine Zuführöffnung 60 und eine Austragsöffnung 61 für die Kunststoffschmelze K auf. Weiterhin ist in dem Gehäuse 49 eine quer zu der Förderrichtung 3 verlaufende und den Gehäusekanal 50 durchquerende Führungsbohrung 51 ausgebildet. In der Führungsbohrung 51 ist ein Schiebeelement 52 angeordnet, das mittels eines Betätigungsantriebs 53 quer zu der Förderrichtung 3 verlagerbar ist. Der Betätigungsantrieb 53 ist beispielsweise hydraulisch oder elektromechanisch ausgebildet und in Fig. 5 lediglich angedeutet.

In dem Schiebeelement 52 sind zwei durchgehende Aufnahmeöffnungen 54, 55 ausgebildet, in denen jeweils ein statisches Homogenisierungselement 56, 57 gelagert ist. Die Aufnahmeöffnungen 54, 55 sind quer zu der Förderrichtung 3 derart beabstandet, dass sich jeweils eines der Homogenisierungselemente 56, 57 außerhalb des Gehäuses 49 befindet, wenn sich das jeweils andere Homogenisierungselement 56, 57 in dem Gehäusekanal 50 befindet.

Die Homogenisierungselemente 56, 57 weisen jeweils eine Grundplatte 58 auf, in der entsprechend dem Homogenisierungselement 41 mehrere Strömungskanäle S₁ bis Sₙ ausgebildet sind. Die Strömungskanäle S₁ bis Sₙ weisen in einer Kanallängsrichtung 59 zugehörige Längen L₁ bis Lₙ und quer zu der Kanallängsrichtung 59 zugehörige Querschnittsflächen A₁ bis Aₙ und zugehörige Querschnittsformen Q₁ bis Qₙ auf. Erfindungsgemäß unterscheiden sich zumindest ein Teil der Strömungskanäle S₁ bis Sₙ in mindestens einem der Merkmale aus der Gruppe Länge L₁ bis Lₙ, Querschnittsfläche A₁ bis Aₙ und Querschnittsform Q₁ bis Qₙ. Die Homogenisierungselemente 56, 57 weisen - wie in Fig. 5 beispielhaft dargestellt ist - insbesondere polygonale Querschnittsformen Q auf. Die unterschiedlichen Längen L der Strömungskanäle S₁ bis Sₙ wurden beispielsweise durch Abtragen der Grundplatte 58 in Teilbereichen erzeugt. Hinsichtlich der weiteren Merkmale wird auf das Homogenisierungselement 41 verwiesen. Die Homogenisierungselemente 56, 57 können hinsichtlich ihrer Strömungskanäle S₁ bis Sₙ identisch oder unterschiedlich ausgebildet sein.

Die Schmelzepumpe 5 ist im Aufbau grundsätzlich bekannt und beispielsweise als Zahnradpumpe ausgebildet. Die Schmelzepumpe 5 dient zur Erhöhung des Schmelzedrucks für die nachgelagerte Granuliervorrichtung 6. Die Granuliervorrichtung 6 ist im Aufbau ebenfalls bekannt und beispielsweise als Unterwasser-Granuliervorrichtung ausgebildet.

Im Folgenden ist die Funktionsweise der Aufbereitungsanlage 1 beschrieben:
Die Aufbereitungsanlage 1 dient zum Aufbreiten und Homogenisieren von Kunststoffschmelzen K. Die Kunststoffschmelzen K weisen insbesondere Bestandteile mit unterschiedlichen Viskositäten auf. Beispielsweise handelt es sich bei diesen Kunststoffschmelzen K um bimodale Polymerschmelzen, die schwierig mischbar bzw. homogenisierbar sind und unerwünschte Gele enthalten.

Zur Herstellung der Kunststoffschmelze K wird Kunststoffmaterial in üblicher Weise durch die Zuführöffnung 24 in die Einzugszone 27 der Schneckenmaschine 2 zugeführt. Das Kunststoffmaterial wird in der Förderrichtung 3 zu der Aufschmelzzone 28 gefördert und dort zu der Kunststoffschmelze K aufgeschmolzen.

Anschließend wird das Kunststoffmaterial K zu der Mischzone 29 gefördert und dem Homogenisierungselement 41 zugeführt. Durch die Zwangsförderung durchströmt die Kunststoffschmelze K das Homogenisierungselement 41, wobei die Kunststoffschmelze K aufgrund der Strömungskanäle S₁ bis Sₙ in entsprechende Teilströme T₁ bis Tₙ aufgeteilt wird. Die Teilströme T₁ bis Tₙ durchströmen die Strömungskanäle S₁ bis Sₙ, wobei sich die Strömungsverhältnisse in den einzelnen Strömungskanälen S₁ bis Sₙ aufgrund der unterschiedlichen Längen L und/oder der unterschiedlichen Querschnittsflächen A und/oder der unterschiedlichen Querschnittsformen Q voneinander unterscheiden. Dies führt dazu, dass die Teilströme T₁ bis Tₙ am stromabwärtigen Ausgang des Homogenisierungselements 41 unterschiedliche Strömungsprofile und/oder unterschiedliche Strömungsgeschwindigkeiten v₁ bis vₙ aufweisen. Dies ist beispielhaft in Fig. 2 veranschaulicht, in der Strömungsprofile mit Strömungsgeschwindigkeiten v₁ bis vₙ der Teilströme T₁, T₂ und Tₙ dargestellt sind.

Im nachfolgenden Freiraum 47 der Mischzone 29 stellt sich wieder eine gleichmäßige Strömung ein, so dass die Kunststoffschmelze K bzw. deren Teilströme T₁ bis Tₙ beim Übergang zu der gleichmäßigen Strömung einer Dehnung und Scherung unterworfen ist. Auf die Teilströme T₁ bis Tₙ wirken somit Dehn- und Scherkräfte, die zu einer Homogenisierung der Kunststoffschmelze K führen. Der Freiraum 47 weist in der Förderrichtung 3 eine Länge L_{F} auf. Für die Länge L_{F} gilt bezogen auf eine maximale Abmessung D der Strömungskanäle S₁ bis S_{N} quer bzw. senkrecht zu der Förderrichtung 3: L_{F} ≥ 0,5 · D, insbesondere L_{F} ≥ 2 · D und insbesondere L_{F} ≥ 4 · D.

Durch die unterschiedlich ausgebildeten Strömungskanäle S₁ bis Sₙ ist ein zugehöriger Differenzdruck p₁ bis pₙ der Teilströme T₁ bis Tₙ von dem Eingang bis zu dem zugehörigen Ausgang des jeweiligen Strömungskanals S₁ bis Sₙ unterschiedlich. Diese unterschiedlichen Differenzdrücke p₁ bis pₙ führen ausgangsseitig zu den unterschiedlichen Strömungsprofilen und Strömungsgeschwindigkeiten v₁ bis vₙ, wodurch beim Übergang zu der gemeinsamen Strömung bzw. dem gemeinsamen Strömungsprofil die Dehnung und Scherung und dementsprechend Homogenisierung der Kunststoffschmelze K erfolgt. Der Unterschied bzw. die Differenz zwischen den Differenzdrücken p₁ bis pₙ ist umso größer, je größer das Verhältnis Lₘₐₓ / Lₘᵢₙ und/oder Aₘₐₓ / Aₘᵢₙ ist.

Absolut betrachtet sind die Differenzdrücke p₁ bis pₙ jedoch aufgrund der insgesamt großen freien Querschnittsfläche A₁ + ... + Aₙ vergleichsweise gering, so dass das Homogenisierungselement 41 insgesamt zu einem geringen Druckverlust der Kunststoffschmelze K führt. Durch unterschiedliche Querschnittsformen Q und aufgrund der Wandhaftung der Kunststoffschmelze K können unterschiedliche Strömungsprofile und Strömungsgeschwindigkeiten v₁ bis vₙ erzeugt werden.

Flüchtige Bestandteile können beim Homogenisieren durch die Entgasungsöffnung 48 entweichen. Die homogenisierte Kunststoffschmelze K wird anschließend zu der Druckaufbauzone 30 gefördert und dort durch die Austragsöffnung 25 aus der Schneckenmaschine 2 ausgetragen und der statischen Homogenisierungsvorrichtung 4 zugeführt. Dort erfolgt nochmals eine Homogenisierung der Kunststoffschmelze K, indem diese eines der Homogenisierungselemente 56, 57 durchströmt. Hinsichtlich der Funktionsweise der Homogenisierungselemente 56, 57 wird auf die Ausführungen zu dem Homogenisierungselement 41 verwiesen. Bei einer unterschiedlichen Ausbildung der Homogenisierungselemente 56, 57 kann je nach Art der Kunststoffschmelze K ein geeignetes Homogenisierungselement 56, 57 gewählt werden, indem mittels des Betätigungsantriebs 53 das Schiebeelement 52 quer zu der Förderrichtung 3 verlagert und das gewünschte Homogenisierungselement 56, 57 in dem Gehäusekanal 50 angeordnet wird.

Die Merkmale der Homogenisierungselemente 41, 56, 57 und der zugehörigen Homogenisierungsvorrichtungen 2, 4 können zur Erzielung einer gewünschten Homogenisierungswirkung beliebig miteinander kombiniert werden.

## Patentansprüche

1. Vorrichtung zur Homogenisierung von Kunststoffschmelzen, mit
- einem Gehäuse (7),
- mindestens einem Gehäusekanal (14, 15) für eine zu homogenisierende Kunststoffschmelze (K),
-- der in dem Gehäuse (7) ausgebildet ist und
-- der sich von einer Zuführöffnung (24) bis zu einer Austragsöffnung (25) erstreckt,
- einem Homogenisierungselement (41) mit mehreren Strömungskanälen (S₁ bis Sₙ) für die zu homogenisierende Kunststoffschmelze (K),
-- wobei jeder der Strömungskanäle (S₁ bis Sₙ) eine in einer Kanallängsrichtung (46) definierte Länge (L₁ bis Lₙ) und eine quer zu der Kanallängsrichtung (46) definierte Querschnittsfläche (A₁ bis Aₙ) und eine Querschnittsform (Q₁ bis Qₙ) aufweist,
-- wobei die Vorrichtung als Schneckenmaschine (2) ausgebildet ist,
- wobei in dem mindestens einen Gehäusekanal (14, 15) mindestens eine Behandlungselementwelle (16, 17) angeordnet ist, die um eine zugehörige Drehachse (19, 20) drehantreibbar ist,
- wobei die mindestens eine Behandlungselementwelle (16, 17) mindestens eine Welle (31, 32) umfasst, auf der nacheinander Behandlungselemente (33, 34, 35, 36, 39, 40) drehfest angeordnet sind,
- wobei das Homogenisierungselement (41) zwischen der Zuführöffnung (24) und der Austragsöffnung (25) der Schneckenmaschine (2) angeordnet ist,
- wobei sich das mindestens eine Homogenisierungselement (41) in den mindestens einen Gehäusekanal (14, 15) erstreckt und von der mindestens einen Behandlungselementwelle (16, 17) durchsetzt ist, **dadurch gekennzeichnet, dass** sich zumindest ein Teil der Strömungskanäle (S1 bis Sn) in mindestens einem Merkmal aus der Gruppe Länge (L1 bis Ln) und Querschnittsform (Q1 bis Qn) unterscheiden, und dass die mindestens eine Querschnittsform (Q) der Strömungskanäle (S1 bis Sn) ausgewählt ist aus der Gruppe rund, oval, tropfenförmig und polygonal.

2. Vorrichtung nach Anspruch 1, **dadurch gekennzeichnet,**
**dass** die Strömungskanäle (S₁ bis Sₙ) mindestens zwei unterschiedliche Längen (L), insbesondere mindestens drei unterschiedliche Längen (L), und insbesondere mindestens vier unterschiedliche Längen (L) aufweisen.

3. Vorrichtung nach Anspruch 1 oder 2, **dadurch gekennzeichnet,**
**dass** für das Verhältnis einer maximalen Länge Lₘₐₓ zu einer minimalen Länge Lₘᵢₙ, der Strömungskanäle (S₁ bis Sₙ) gilt: Lₘₐₓ/ Lₘᵢₙ ≥ 1,2, insbesondere Lₘₐₓ/ Lₘᵢₙ ≥ 1,6, und insbesondere Lₘₐₓ/ Lₘᵢₙ ≥ 2.

4. Vorrichtung nach einem der Ansprüche 1 bis 3, **dadurch gekennzeichnet,**
**dass** für eine minimale Länge Lₘᵢₙ der Strömungskanäle (S₁ bis Sₙ) gilt: Lₘᵢₙ ≥ 10 mm, insbesondere Lₘᵢₙ ≥ 30 mm, und insbesondere Lₘᵢₙ ≥ 50 mm, und/oder
**dass** für eine maximale Länge Lₘₐₓ der Strömungskanäle (S₁ bis Sₙ) gilt: Lₘₐₓ ≤ 500 mm, insbesondere Lₘₐₓ ≤ 300 mm, und insbesondere Lₘₐₓ ≤ 100 mm.

5. Vorrichtung nach einem der Ansprüche 1 bis 4, **dadurch gekennzeichnet,**
**dass** die Strömungskanäle (S₁ bis Sₙ) an einer offenen Seite, insbesondere an einer bezogen auf eine Förderrichtung (3) der Kunststoffschmelze (K) stromabwärtigen Seite, bündig enden.

6. Vorrichtung nach einem der Ansprüche 1 bis 5, **dadurch gekennzeichnet,**
**dass** die Strömungskanäle (S₁ bis Sₙ) an einer offenen Seite, insbesondere an einer bezogen auf eine Förderrichtung (3) der Kunststoffschmelze (K) stromaufwärtigen Seite, versetzt enden.

7. Vorrichtung nach einem der Ansprüche 1 bis 6, **dadurch gekennzeichnet,**
**dass** die Strömungskanäle (S₁ bis Sₙ) mindestens zwei unterschiedliche Querschnittsflächen (A), insbesondere mindestens drei unterschiedliche Querschnittsflächen (A), und insbesondere mindestens vier unterschiedliche Querschnittsflächen (A) aufweisen.

8. Vorrichtung nach einem der Ansprüche 1 bis 7, **dadurch gekennzeichnet,**
**dass** für das Verhältnis einer maximalen Querschnittsfläche Aₘₐₓ zu einer minimalen Querschnittsfläche Aₘᵢₙ der Strömungskanäle (S₁ bis Sₙ) gilt: Aₘₐₓ/ Aₘᵢₙ ≥ 1,2, insbesondere Aₘₐₓ/ Aₘᵢₙ ≥ 1,6, und insbesondere Aₘₐₓ/ Aₘᵢₙ ≥ 2.

9. Vorrichtung nach einem der Ansprüche 1 bis 8, **dadurch gekennzeichnet,**
**dass** für eine minimale Querschnittsfläche Aₘᵢₙ der Strömungskanäle (S₁ bis Sₙ) gilt: Aₘᵢₙ ≥ 5 mm², insbesondere Aₘᵢₙ ≥ 10 mm², und insbesondere Aₘᵢₙ ≥ 15 mm², und/oder
**dass** für eine maximale Querschnittsfläche Aₘₐₓ der Strömungskanäle (S₁ bis Sₙ) gilt: Aₘₐₓ < 1600 mm², insbesondere Aₘₐₓ ≤ 800 mm², und insbesondere Aₘₐₓ ≤ 600 mm².

10. Vorrichtung nach einem der Ansprüche 1 bis 9, **dadurch gekennzeichnet,**
**dass** die Strömungskanäle (S₁ bis Sₙ) mindestens zwei unterschiedliche Querschnittsformen (Q), insbesondere mindestens drei unterschiedliche Querschnittsformen (Q), und insbesondere mindestens vier unterschiedliche Querschnittsformen (Q) aufweisen.

11. Vorrichtung nach einem der Ansprüche 1 bis 10, **dadurch gekennzeichnet,**
**dass** die Strömungskanäle (S₁ bis Sₙ) in einer Kanallängsrichtung (46) geradlinig verlaufen.

12. Vorrichtung nach einem der Ansprüche 1 bis 11, **dadurch gekennzeichnet,**
**dass** die Strömungskanäle (S₁ bis Sₙ) parallel zueinander verlaufen und insbesondere parallel zu einer Förderrichtung (3) der Kunststoffschmelze (K).

13. Verfahren zur Homogenisierung von Kunststoffschmelzen, umfassend folgende Schritte:
- Bereitstellen einer Vorrichtung (2) nach mindestens einem der Ansprüche 1 bis 12 und einer Kunststoffschmelze (K),
- Fördern der Kunststoffschmelze (K) in einer Förderrichtung (3) zu dem mindestens einen Homogenisierungselement (41),
- Durchströmen des mindestens einen Homogenisierungselements (41), indem sich die Kunststoffschmelze (K) in mehrere Teilströme (T₁ bis Tₙ) aufteilt und die Teilströme (T₁ bis Tₙ) einen jeweils zugehörigen Strömungskanal (S₁ bis Sₙ) durchströmen und beim Austritt aus dem jeweiligen Strömungskanal (S₁ bis Sₙ) unterschiedliche Strömungsgeschwindigkeiten (v₁ bis vₙ) aufweisen.

## Claims

1. Device for the homogenisation of plastics material melts, comprising
- a housing (7),
- at least one housing channel (14, 15) for a plastics material melt (K) to be homogenised,
-- which is formed in the housing (7) and
-- which extends from a feed opening (24) to a discharge opening (25),
- a homogenising element (41) comprising a plurality of flow channels (S₁ to Sₙ) for the plastic material melt (K) to be homogenised,
-- wherein each of the flow channels (S₁ to Sₙ) has a length (L₁ to Lₙ) defined in a channel longitudinal direction (46) and a cross sectional area (A₁ to Aₙ) defined transverse to the channel longitudinal direction (46) and a cross sectional shape (Q₁ to Qₙ),
-- wherein the device is configured as a screw machine (2),
- wherein at least one treatment element shaft (16, 17) is arranged in the at least one housing channel (14, 15), the treatment element shaft (16, 17) being rotatably drivable about an associated rotational axis (19, 20),
- wherein the at least one treatment element shaft (16, 17) comprises at least one shaft (31, 32) on which treatment elements (33, 34, 35, 36, 39, 40) are non-rotatably arranged consecutively,
- wherein the homogenising element (41) is arranged between the feed opening (24) and the discharge opening (25) of the screw machine (2),
- wherein the homogenising element (41) extends in the at least one housing channel (14, 15) and is passed through by the at least one treatment element shaft (16, 17), **characterized in**
**that** at least some of the flow channels (S₁ to Sₙ) differ with respect to at least one feature from the group length (L₁ to Lₙ) and cross sectional shape (Q₁ to Qₙ), and
**that** the at least one cross sectional shape (Q) of the flow channels (S₁ to Sₙ) is selected from the group round, oval, drop-shaped and polygonal.

2. Device according to claim 1, **characterised in**
**that** the flow channels (S₁ to Sₙ) have at least two different lengths (L), in particular at least three different lengths (L), and, in particular, at least four different lengths (L).

3. Device according to claim 1 or 2, **characterised in**
**that** there applies to the ratio of a maximum length Lₘₐₓ to a minimum length Lₘᵢₙ of the flow channels (S₁ to Sₙ): Lₘₐₓ/ Lₘᵢₙ ≥ 1.2, in particular Lₘₐₓ/ Lₘᵢₙ ≥ 1.6, and, in particular, Lₘₐₓ/ Lₘᵢₙ ≥ 2.

4. Device according to any one of claims 1 to 3, **characterised in**
**that** there applies to a minimum length Lₘᵢₙ of the flow channels (S₁ to Sₙ): Lₘᵢₙ ≥ 10 mm, in particular Lₘᵢₙ ≥ 30 mm, and, in particular, Lₘᵢₙ ≥ 50 mm, and/or
in that there applies to a maximum length Lₘₐₓ of the flow channels (S₁ to Sₙ): Lₘₐₓ ≤ 500 mm, in particular, Lₘₐₓ ≤ 300 mm, and, in particular, Lₘₐₓ ≤ 100 mm.

5. Device according to any one of claims 1 to 4, **characterised in**
**that** the flow channels (S₁ to Sₙ) end flush at an open side, in particular at a side that is downstream in relation to a conveying direction (3) of the plastics material melt (K).

6. Device according to any one of claims 1 to 5, **characterised in**
**that** the flow channels (S₁ to Sₙ) end offset at an open side, in particular at a side that is upstream in relation to a conveying direction (3) of the plastic material melt (K).

7. Device according to any one of claims 1 to 6, **characterised in**
**that** the flow channels (S₁ to Sₙ) have at least two different cross sectional areas (A), in particular at least three different cross sectional areas (A), and in particular at least four different cross sectional areas (A).

8. Device according to any one of claims 1 to 7, **characterised in**
**that** there applies to the ratio of a maximum cross sectional area Aₘₐₓ to a minimum cross sectional area Aₘᵢₙ of the flow channels (S₁ to Sₙ): Aₘₐₓ/ Aₘᵢₙ ≥ 1.2, in particular, Aₘₐₓ/ Aₘᵢₙ ≥ 1.6, and, in particular, Aₘₐₓ/ Aₘᵢₙ ≥ 2.

9. Device according to any one of claims 1 to 8, **characterised in**
**that** there applies to a minimum cross sectional area Aₘᵢₙ of the flow channels (S₁ to Sₙ): Aₘᵢₙ ≥ 5 mm², in particular, Aₘᵢₙ ≥ 10 mm², and, in particular, Aₘᵢₙ ≥ 15 mm², and/or
in that there applies to a maximum cross sectional area Aₘₐₓ of the flow channels (S₁ to Sₙ): Aₘₐₓ ≤ 1600 mm², in particular, Aₘₐₓ ≤ 800 mm², and, in particular, Aₘₐₓ ≤ 600 mm².

10. Device according to any one of claims 1 to 9, **characterised in**
**that** the flow channels (S₁ to Sₙ) have at least two different cross sectional shapes (Q), in particular at least three different cross sectional shapes (Q), and, in particular, at least four different cross sectional shapes (Q).

11. Device according to any one of claims 1 to 10, **characterised in**
**that** the flow channels (S₁ to Sₙ) run linearly in a channel longitudinal direction (46).

12. Device according to any one of claims 1 to 11, **characterised in**
**that** the flow channels (S₁ to Sₙ) run parallel to one another and, in particular, parallel to a conveying direction (3) of the plastics material melt (K).

13. Method for the homogenisation of plastics material melts, comprising the following steps:
- providing a device (2) according to at least any one of claims 1 to 12 and a plastics material melt (K),
- conveying the plastic material melt (K) in a conveying direction (3) to the at least one homogenising element (41),
- flowing through the at least one homogenising element (41), in that the plastics material melt (K) is divided into a plurality of part streams (T₁ to Tₙ) and the part streams (T₁ to Tₙ) flow through a respective associated flow channel (S₁ to Sₙ) and on leaving the respective flow channel (S₁ to Sₙ) have different flow speeds (v₁ to Vₙ).

## Revendications

1. Dispositif d'homogénéisation de masses fondues de matière plastique, comprenant
- un boîtier (7),
- au moins un canal de boîtier (14, 15) pour une masse fondue de matière plastique (K) à homogénéiser,
-- qui est formé dans le boîtier (7) et
-- qui s'étend d'une ouverture d'alimentation (24) à une ouverture d'évacuation (25),
- un élément d'homogénéisation (41) comportant plusieurs canaux d'écoulement (S₁ à Sₙ) pour la masse fondue de matière plastique (K) à homogénéiser,
-- dans lequel chacun des canaux d'écoulement (S₁ à Sₙ) présente une longueur (L₁ à Lₙ) définie dans une direction longitudinale de canal (46) et une surface de section transversale (A₁ à Aₙ) définie transversalement à la direction longitudinale de canal (46) et une forme en section transversale (Q₁ à Qₙ),
-- dans lequel le dispositif est réalisé sous la forme d'une machine à vis sans fin (2),
- dans lequel est agencé dans ledit au moins un canal de boîtier (14, 15) au moins un arbre d'élément de traitement (16, 17), qui peut être entraîné en rotation autour d'un axe de rotation (19, 20) associé,
- dans lequel ledit au moins un arbre d'élément de traitement (16, 17) comprend au moins un arbre (31, 32), sur lequel les éléments de traitement (33, 34, 35, 36, 39, 40) sont agencés solidaires en rotation les uns derrière les autres,
- dans lequel l'élément d'homogénéisation (41) est agencé entre l'ouverture d'alimentation (24) et l'ouverture de distribution (25) de la machine à vis sans fin (2),
- dans lequel ledit au moins un élément d'homogénéisation (41) s'étend dans ledit au moins un canal de boîtier (14, 15) et est traversé par ledit au moins un arbre d'élément de traitement (16, 17), **caractérisé en ce qu'**au moins une partie des canaux d'écoulement (S1 à Sn) se distinguent par au moins une caractéristique du groupe longueur (L1 à Ln) et forme en section transversale (Q₁ à Qₙ), et **en ce que** ladite au moins une forme en section transversale (Q) des canaux d'écoulement (S₁ à Sₙ) est choisie dans le groupe rond, ovale, en forme de goutte et polygonal.

2. Dispositif selon la revendication 1, **caractérisé**
**en ce que** les canaux d'écoulement (S₁ à Sₙ) présentent au moins deux longueurs (L) différentes, en particulier au moins trois longueurs (L) différentes, et en particulier au moins quatre longueurs (L) différentes.

3. Dispositif selon la revendication 1 ou 2, **caractérisé**
**en ce que** pour le rapport d'une longueur maximale Lₘₐₓ à une longueur minimale Lₘᵢₙ des canaux d'écoulement (S₁ à Sₙ) s'applique : Lₘₐₓ/Lₘᵢₙ≥1, 2, en particulier Lₘₐₓ/Lₘᵢₙ≥1, 6, et en particulier Lₘₐₓ/Lₘᵢₙ≥2.

4. Dispositif selon l'une quelconque des revendications 1 à 3, **caractérisé**
**en ce que** pour une longueur minimale Lₘᵢₙ des canaux d'écoulement (S₁ à Sₙ) s'applique : Lₘᵢₙ≥10 mm, en particulier Lₘᵢₙ≥30 mm, et en particulier Lₘᵢₙ≥50 mm, et/ou
**en ce que** pour une longueur maximale Lₘₐₓ des canaux d'écoulement (S₁ à Sₙ) s'applique : Lₘₐₓ≤500 mm, en particulier Lₘₐₓ≤300 mm, et en particulier Lₘₐₓ≤100 mm.

5. Dispositif selon l'une quelconque des revendications 1 à 4, **caractérisé**
**en ce que** les canaux d'écoulement (S₁ à Sₙ) terminent en affleurement sur une face ouverte, en particulier sur une face aval par rapport à une direction de transport (3) de la masse fondue de matière plastique (K).

6. Dispositif selon l'une quelconque des revendications 1 à 5, **caractérisé**
**en ce que** les canaux d'écoulement (S₁ à Sₙ) terminent de manière décalée sur une face ouverte, en particulier sur une face amont par rapport à une direction de transport (3) de la masse fondue de matière plastique (K).

7. Dispositif selon l'une quelconque des revendications 1 à 6, **caractérisé**
**en ce que** les canaux d'écoulement (S₁ à Sₙ) présentent au moins deux surfaces de section transversale (A) différentes, en particulier au moins trois surfaces de section transversale (A) différentes, et en particulier au moins quatre surfaces de section transversale (A) différentes.

8. Dispositif selon l'une quelconque des revendications 1 à 7, **caractérisé**
**en ce que** pour le rapport d'une surface de section transversale maximale Aₘₐₓ à une surface de section transversale minimale Aₘᵢₙ des canaux d'écoulement (S₁ à Sₙ) s'applique : Aₘₐₓ/Aₘᵢₙ≥1 2, en particulier Aₘₐₓ/Aₘᵢₙ≥1, 6, et en particulier Aₘₐₓ/Aₘᵢₙ≥2.

9. Dispositif selon l'une quelconque des revendications 1 à 8, **caractérisé**
**en ce que** pour une surface de section transversale minimale Aₘᵢₙ des canaux d'écoulement (S₁ à Sₙ) s'applique : Aₘᵢₙ≥5 mm², en particulier Aₘᵢₙ≥10 mm², et en particulier Aₘᵢₙ≥15 mm² et/ou
**en ce que** pour une surface de section transversale maximale Aₘₐₓ des canaux d'écoulement (S₁ à Sₙ) s'applique : Aₘₐₓ≤1600 mm², en particulier Aₘₐₓ≤800 mm², et en particulier Aₘₐₓ≤600 mm².

10. Dispositif selon l'une quelconque des revendications 1 à 9, **caractérisé**
**en ce que** les canaux d'écoulement (S₁ à Sₙ) présentent au moins deux formes de section transversale (Q) différentes, en particulier au moins trois formes de section transversale (Q) différentes, et en particulier au moins quatre formes de section transversale (Q) différentes.

11. Dispositif selon l'une quelconque des revendications 1 à 10, **caractérisé**
**en ce que** les canaux d'écoulement (S₁ à Sₙ) s'étendent de manière rectiligne dans une direction longitudinale de canal (46).

12. Dispositif selon l'une quelconque des revendications 1 à 11, **caractérisé**
**en ce que** les canaux d'écoulement (S₁ à Sₙ) s'étendent parallèlement les uns aux autres et en particulier parallèlement à une direction de transport (3) de la masse fondue de matière plastique (K).

13. Procédé d'homogénéisation de masses fondues de matière plastique, comprenant les étapes suivantes :
- la fourniture d'un dispositif (2) selon au moins l'une quelconque des revendications 1 à 12 et d'une masse fondue de matière plastique (K),
- le transport de la masse fondue de matière plastique (K) dans une direction de transport (3) vers ledit au moins un élément d'homogénéisation (41),
- la traversée dudit au moins un élément d'homogénéisation (41), par le fait que la masse fondue de matière plastique (K) se divise en plusieurs courants partiels (T₁ à Tₙ) et que les courants partiels (T₁ à Tₙ) s'écoulent à travers un canal d'écoulement (S₁ à Sₙ) respectivement associé et présentent différentes vitesses d'écoulement (v₁ à vₙ) lorsqu'ils sortent du canal d'écoulement (S₁ à Sₙ) respectif.
